# EUROPEAN PATENT SPECIFICATION

(11) **EP 1 616 904 B1**
(45) Date of publication and mention of the grant of the patent: **27.08.2008**
(21) Application number: 05090188.3
(22) Date of filing: 23.06.2005
(51) Int. Cl.: C08K 5/378, C08K 5/00, C08K 5/13

(54) **Vulcanizing latex compounds without the use of metal oxide activators or a zinc based accelerator**
Vulkanisation von Latexzusammensetzungen ohne Metalloxide als Aktivatoren oder ohne Beschleuniger auf Basis von Zink
Vulcanisation de compositions de latex sans utilisation d'activateurs d'oxyde de métal ou d'accélérateur à base de zinc

(30) Priority: 16.07.2004 US 588456 P; 16.02.2005 US 58818
(43) Date of publication of application: 18.01.2006
(73) Proprietor: R.T. VANDERBILT COMPANY, INC., Norwalk Connecticut 06855 (US)
(72) Inventor: Dzikowicz, Robert Thomas, Monroe Connecticut 06468 (US)
(74) Representative: Ziebig, Marlene

(56) References cited:
- EP-A- 0 413 504
- WO-A-03/072340
- US-A1- 2003 088 002
- R.T. VANDERBILT CO.: "Vanox ZMTI Slurry and SETSIT Liquid Accelerator" VANDERBILT TECHNICAL DATA, no. 1217, March 2005 (2005-03), XP002344454 Retrieved from the Internet: URL:http://www.rtvanderbilt.com/TDS%201217 .pdf> [retrieved on 2005-09-12]
- GORTON A D T ET AL: "THE EFFECTS OF ANTIOXIDANTS ON THE AGEING OF NATURAL RUBBER LATEX THREAD" NR TECHNOLOGY, MRPRA. BRICKENDONBURY, HERTFORDSHIRE, GB, vol. 20, no. PART 4, January 1989 (1989-01), pages 65-71, XP000117355

## Description

### CROSS-REFERENCE TO RELATED APPLICATIONS

This application claims the benefit of U.S. Provisional Application 60/588,846 filed July 16, 2004.

### BACKGROUND OF THE INVENTION

### Field of the Invention

The invention relates to latex compounds that may be cured without the use of a metal oxide and/or without the use of zinc based accelerators. The latex compounds may comprise zinc based antioxidant materials to provide zinc to the compounds. The invention further relates to methods for vulcanizing latex films without the use of metal oxide and/or without the use of zinc based accelerators.

### The Related Art

Metal oxides, such as zinc oxide, can be used for vulcanizing latex compounds. Specifically, metal oxide functions as an activator for sulfur cure systems and a donor to the metal chloride crosslinks in a polychloroprene. For example, use of zinc oxide donates to zinc chloride crosslinks in a polychloroprene. Other metal oxides which may also be used for vulcanizing latex compounds include magnesium oxide and lead oxide.

Zinc oxide has a specific gravity of 5.5 and settles quickly in water dispersions and latex compounds. Other metal oxides generally experience the same phenomena in water dispersions and latex compounds. As such, containers of latex dispersions comprising metal oxides, such as zinc oxide, must be vigorously remixed before each use because the metal oxide generally settles to the bottom of the container. Also, when latex dispersion master batches of accelerator, antioxidant and metal oxide, like zinc oxide, are prepared, frequent remixing is required which is difficult and time consuming. Furthermore, when hold and dipping tanks of the type used in the latex dipped goods industry are cleaned, the evidence of metal oxide accumulation and settling is pronounced, as in the case of zinc oxide. The same evidence is generally found in baths of latex compound in the manufacture of latex thread.

Metal oxides, particularly zinc oxide, have an important role in the activation of a latex compound. Accordingly, homogeneous consistency within the dispersion is needed for proper vulcanization of the latex material, however, accurate levels of the metal oxide are difficult to maintain due in part to the specific gravity of the metal oxide, which is particularly relevant with zinc oxide.

Another consideration with zinc oxide is that the level of zinc oxide in natural rubber and synthetic latex compounds is primarily responsible for dynamic and continual viscosity increases which affect the shelf life of such compounds. This consideration is pertinent to other metal oxides as well. Without the zinc oxide (or other metal oxides), as well as zinc based thiazole or dithiocarbamate accelerators, viscosity fluctuations would not be a consideration and natural rubber and synthetic latex compounds could be held for a very long time in storage.

Prior to the invention, the function of zinc based material in, for example, an antioxidant system having zinc based synergist, was thought only to enhance the performance of the antioxidant. Indeed, in the prior art, zinc 2-mercaptotoluimidazole compounds are said to improve high temperature performance of compounds comprising thermoplastic polymers.

WO03/072340 discloses articles made from rubber latex. The latex formulations contain Wingstay L, a phenolic antioxidant. The articles are vulcanized without the use of zinc oxide. Formulation C comprises a zinc compound which is a vulcanization accelerator.

EP-A-0 413 504 discloses articles made from rubber or rubber latex. The rubber compositions contain a phenolic antioxidant. They are vulcanized without the use of zinc oxide. Examples 11 and 12 comprise a zinc compound which is a vulcanization accelerator.

US-A-2003/0088002 discloses a latex film with improved tear resistance, tensile strength and aging properties. The latex composition contains a phenolic antioxidant, zinc 2-mercaptotoluimidazole as antioxidant synergist and is vulcanized in the presence of zinc oxide.

In this specification, all parts and percentages are on a weight by weight basis unless otherwise specified.

### SUMMARY OF THE INVENTION

The invention relates to the surprising discovery that latex compounds can be effectively vulcanized without the use of metal oxide and/or without the use of zinc based accelerators. In an aspect of the invention, the latex compounds comprise a zinc based antioxidant material, for example an antioxidant system having a zinc based synergist which provides zinc to the compound. The zinc based synergist provides multiple functions in a latex compound; such as 1) antixoidant synergist, 2) an activator for sulfur cured compounds and 3) as a zinc source for zinc chloride crosslinks in polychloroprene. Acceptable physical properties can be obtained from compounds comprising no metal oxide and no zinc based accelerator.

Methods for curing latex films without metal oxide and/or without zinc based accelerators are also within the scope of the invention. In one aspect of the invention, the method generally concerns heating latex films comprising zinc based antioxidant material (e.g. synergist). The method generally comprises the steps of forming a film of a latex compound having no metal oxide or zinc based accelerator, such as films of compounds comprising zinc based antioxidant material, and heating the film.

### DETAILED DESCRIPTION OF THE INVENTION

The latex compounds of the invention do not comprise either metal oxide, such as zinc oxide, magnesium oxide, lead oxide or combinations thereof. The latex compounds may also not comprise a zinc based accelerator. In an embodiment of the invention, the latex compounds comprise a zinc based antioxidant material (e.g. synergist). The amount of zinc based antioxidant synergist material may be 0.1 parts per hundred rubber (hereinafter referred to as "phr") or less, to 5.0 phr, or more. In an aspect of the invention, the zinc based antioxidant synergist material functions as an activator for a curing system for latex compounds.

In an embodiment of the invention, the zinc based antioxidant materials comprise a synergist selected from the group consisting of zinc 2-mercaptotoluimidazole ("ZMTI") and zinc 2-mercaptobenzimidazole ("ZMBI"), or combinations thereof. A zinc based antioxidant system useful in the invention may comprise a combination of phenolic antioxidant (phenol) and ZMTI. VANOX® SPL, which is a mixture of phenolic antioxidant and ZMTI available from R.T. Vanderbilt Co. Inc., Norwalk, Connecticut, USA ("Vanderbilt") may be used, alone or in addition to separate phenolic antioxidant (such as VANOX® L from Vanderbilt) and zinc 2-mercaptotoluimidazole (such as VANOX® ZMTI from Vanderbilt) in the compound.

The latex compounds generally comprise heat curable natural or synthetic rubber type materials. The latex compounds may comprise one or more of the materials selected from the group consisting of natural rubber, polyisoprene, polychloroprene, acrylonitrile, styrene-butadiene, sulfur cured butyl, and combinations thereof. Useful polyisoprene materials include KRATON® polymers, such as KRATON® IR-401, from the KRATON® Polymers Group of Companies having offices in Houston, Texas, USA. Neoprene polychloroprene from DuPont Dow Elastomers, Wilmington, Delaware, USA may be used. The zinc based antioxidant synergist material forms part of the elastomer curing system, as well as providing other beneficial properties, such as, for example, enhanced physical properties, high temperature and aging resistance, whiter and brighter colors and film odor reduction to objects cured from the latex compounds.

In an embodiment of the invention, the latex compound comprises a liquid dithiocarbamate having a water soluble base, such as sodium, ammonium, triethylamine and, piperdine. In a preferred embodiment, the liquid dithiocarbamate having a water soluble base may be a blend of sodium dibutyldithiocarbamate ("NaDTC") and sodium mercaptobenzothiazole ("NaMBT").

The latex compounds may further comprise additional accelerator materials such as thiourea, including but not limited to trimethyl, diethtyl, ethylene, and diphenyl . The thiourea may be dibutylthiourea, in particular 1,3-dibutylthiourea, available under the trade name THIATE® U from Vanderbilt.

The latex compounds may further comprise any number of additives. Non limiting examples of such additives are latex modifiers, thickeners, fire retardants, and plasticizers. Useful latex modifiers include sodium lauryl sulfate (DARVAN® WAQ from Vanderbilt) and sulfated methyl oleate (DARVAN® SMO from Vanderbilt). Useful fire retardants include antimony oxide and useful thickeners include sodium polyacrylate thickeners, such as Paragum-231 from Para-Chem, Simpsonville, South Carolina, USA.

In addition to the benefits of overcoming the disadvantages of using zinc oxide, as well as other metal oxides, in latex compounds, another benefit is recognized. A common practice in the glove and balloon dipping industry is to dilute latex compounds to the 25% to 35% range. This is done to limit the amount of pick-up on the former and to control viscosity increases during maturation, especially in natural rubber and polyisoprene latex applications. By using a viscosity stable latex compound, such as the compounds described herein, higher concentrations of latex compound in the dip tanks are possible. Lower concentrations of coagulant might be possible in the coagulation tanks. For some applications, it may be possible to eliminate the coagulant.

Viscosity stable latex compounds afford the manufacturer the luxury of choosing among a wide range of thicknesses and the opportunity to adjust the concentrations of coagulant and latex for optimum pick-up. An application for which this would be an advantage is in the manufacture of teats or baby bottle nipples. Straight dipping applications such as in the manufacture of condoms could benefit. Lineman, household and supported gloves like industrial gloves could be manufactured without multiple dips. Latex thread could be manufactured to greater cross sectional dimensions. Also, in certain applications, such as in the manufacture of teats or baby nipples, the elimination of metal oxides, such as zinc oxide, as well as zinc based accelerators from the formulation is desirable.

Elimination of metal oxides, such as zinc oxide and zinc based accelerators, from the latex compounds will provide environmental benefits. The elimination of the metal oxides and zinc based accelerators will reduce the heavy metal content of waste water effluent from facilities where the latex compounds are manufactured into useful goods.

The invention encompasses latex compounds which can be cured without metal oxide, such as zinc oxide, and/or zinc based accelerators, comprising an antioxidant system having zinc based materials. The zinc based materials may be selected from the group consisting of ZMTI and ZMBI, and the antioxidant may further comprise phenolic antioxidant. The invention also encompasses a method of curing a latex film without metal oxide, such as zinc oxide, and/or zinc based accelerators comprising the steps of forming a film from a latex compound comprising an antioxidant having zinc based materials and heating the film for a period of time. In an embodiment of the invention, the film can be heated up to 1 hour at a temperature up to 150°C, for example for 5 minutes to 45 minutes at 90°C to 150°. The invention further encompasses a curing system for latex compounds wherein zinc based antioxidant synergist provides zinc to the system and acts as an activator, including systems wherein the antioxidant synergist is ZMTI and/or ZMBI.

### EXAMPLES 1-3

Synthetic polyisoprene latex compounds having the compositions set forth in Table 1 were formulated by methods known in the art. All components set forth in Table 1 are reported as phr. Example 2 is a comparative example which includes zinc oxide. The liquid dithiocarbamate (WB-7) used in the compounds listed in Table 1 is a blend of NaDTC and NaMBT. A water dispersion of 2-mercaptotoluimidazole was used in Example 3. Note that in Examples 1-3, as well as other examples in this specification, zinc oxide and sulfur are identified as being from various suppliers. Zinc oxide and sulfur are ubiquitous in the market and the origin of these materials are not pertinent to the function of the examples, however, zinc oxide is generally available from Zinc Corporation of America, Monaca, Pennsylvania, USA and sulfur is generally available from R.E. Carroll Inc., Trenton, New Jersey, USA.

Films made from compounds of Examples 1-3 were cured at different conditions as set forth in Table 2. The curing conditions were 30 minutes at 100°C and 20 minutes at 120°C. The tensile strength, 300% modulus and elongation of each cured film were tested in accordance with ASTM Test Method D412-98a (2001) e1 "Standard Test Methods for Vulcanized Rubber and Thermoplastic Elastomer - Tension". The results are set forth in Table 2.

| **Table 1** | | | | |
|---|---|---|---|---|
| **Components** | **Example** | | | **Ingredient Supplier or Tradename** |
| | **1** | **2** | **3** | |
| Polyisoprene latex | 100 | 100 | 100 | KRATON®, IR-401 |
| Sodium lauryl sulfate | 0.25 | 0.25 | 0.25 | DARVAN® WAQ |
| Zinc Oxide | --- | 0.5 | --- | Various |
| Sulfur | 1.5 | 1.5 | 1.5 | Various |
| Blend of phenolic AO and ZMTI | 2 | 2 | --- | VANOX® SPL |
| 2-mercaptotoluimidazole | --- | --- | 1 | VANOX® MTI |
| Phenolic antioxidant | --- | --- | 1 | VANOX® L |
| Dibutyl Thiourea | 1 | 1 | 1 | THIATE® U |
| Liquid dithiocarbamate (WB-7) | 1 | 1 | 1 | Vanderbilt |
| Sulfated methyl oleate | 0.5 | 0.5 | 0.5 | DARVAN® SMO |

| **Table 2** | | | |
|---|---|---|---|
| | **Results** | | |
| | **Example** | | |
| **Test Applied** | **1** | **2** | **3** |
| **Films cured for 30 min. at 100°C.** | | | |
| Tensile Strength, MPa | 28.2 | 28.2 | 15 |
| 300 % Mod., MPa | 1.3 | 1.3 | 1.2 |
| Elong.,% | 1080 | 970 | 960 |

| **Films cured for 20 min. at 120°C.** | | | |
|---|---|---|---|
| Tensile Strength, MPa | 24.5 | 26.8 | 18.5 |
| 300 % Mod., MPa | 1.2 | 1.4 | 1.2 |
| Elong.,% | 990 | 950 | 930 |

Table 2 shows that for polyisoprene latex compounds, satisfactory physical properties can be obtained with or without the use of zinc oxide or a zinc based accelerator as long as the zinc source, ZMTI, is present. This is verified by Example 3 that contains no ZMTI and had poorer physical properties than Example 1. This is surprising in that zinc comprises only 13%, by weight, of the ZMTI molecule.

### EXAMPLES 4-8

Natural latex rubber compounds having the compositions set forth in Table 3 were formulated by methods known in the art. All components set forth in Table 3 are reported as phr. Example 4 is a comparative example which includes zinc oxide. The liquid dithiocarbamate used in the compounds listed in Table 3 is WB-7, a blend of NaDTC and NaMBT.

Films having thicknesses of 0.64mm (25 mils) to 1.0 mm (40 mils) were made from compounds of Examples 4-8. The films were cured for 20 minutes at 100°C, after which the tensile strength, 300% modulus and elongation of each cured film were tested applying ASTM Test Method D412-98a (2001) e1. The results are set forth in Table 4.

Based on the testing of the cured films, the samples containing no source of zinc, Example 6, and no dithiocarbamate from the liquid dithiocarbamate, Example 7, were slow to improve their physical properties. Therefore, Examples 6 and 7 were not further tested or considered.

The remaining cured compounds, Examples 4, 5 and 8, were subjected to mild heat aging at 70°C for 7 days. The heat aged samples were tested for tensile strength, 300% modulus and elongation applying ASTM Test Method D412-98a (2001) e1.

The testing of the heat aged samples indicates that the physical properties of the compounds improved compared to the testing done prior to aging. Thus, the samples were initially undercured because at normal aging temperatures, fully cured natural rubber latex films would have deteriorated to some degree rather than continue to crosslink.

An appropriate state of cure for the film thicknesses of 0.64 mm (25 mils) to 1.0 mm (40 mils) would require a slightly longer dwell time, a slightly higher temperature or both. The wall thickness of latex examination gloves is generally 0.25mm (10 mils), wherein the applied cure conditions would have been adequate. Nevertheless, none of Examples 4, 5 or 6 displayed deterioration following the normal heat aging procedure employed in the latex glove industry. The testing demonstrates that natural rubber compounds can be cured to form products with acceptable physical properties without using zinc oxide or a zinc based accelerator (Example 5) and that, with natural rubber, the liquid dithiocarbamate has a more pronounced effect on crosslinking than thiourea (compare Examples 7 and 8).

| **Table 3** | | | | | | |
|---|---|---|---|---|---|---|
| | **Example** | | | | | **Ingredient Supplier** |
| **Components** | **4** | **5** | **6** | **7** | **8** | |
| NR LATZ | 100 | 100 | 100 | 100 | 100 | Getahindus (M) Sdn Bhd |
| Sodium lauryl sulfate | 0.25 | 0.25 | 0.25 | 0.25 | 0.25 | DARVAN®WAQ |
| Zinc oxide | 0.5 | --- | --- | --- | --- | Various |
| Sulfur | 1.5 | 1.5 | 1.5 | 1.5 | 1.5 | Various |
| Blend of phenolic AO and ZMTI | 2 | 2 | --- | 2 | 2 | VANOX®SPL |
| Dibutyl Thiourea | 1 | 1 | 1 | 1 | --- | THIATE®U |
| Liquid dithiocarbamate (WB-7) | 1 | 1 | 1 | --- | 1 | Vanderbilt |
| Sulfated methyl oleate | 0.5 | 0.5 | 0.5 | 0.5 | 0.5 | DARVAX®SMO |

| **Table 4** | | | | | |
|---|---|---|---|---|---|
| | **Results** | | | | |
| | **Example** | | | | |
| **Test Applied** | **4** | **5** | **6** | **7** | **8** |
| Curing for 20 mins @ 100°C | | | | | |
| Tensile, MPa | 18.1 | 16.9 | 13.4 | 7 | 16.8 |
| 300% Mod., MPa | 2 | 1.5 | 1.1 | 0.8 | 1.3 |
| Elong., % | 690 | 730 | 740 | 780 | 770 |
| | | | | | |
| Aged for 7 days @ 70°C | | | | | |
| Tensile, MPa | 23.1 | 21.1 | | | 22.9 |
| 300% Mod., MPa | 2.6 | 2 | | | 1.7 |
| Elong., % | 630 | 720 | | | 790 |

### EXAMPLES 9-13

Polychloroprene latex compounds having the compositions set forth in Table 5 were formulated by methods known in the art. All components set forth in Table 5 are reported as phr. Example 9 is a comparative example comprising zinc oxide. Polychloroprene Neoprene from DuPont Dow Elastomers, was used in the compounds formulated for Examples 9-13. The liquid dithiocarbamate used in the compounds listed in Table 5 is WB-7, a blend of NaDTC and NaMBT. The thickener was Paragum 231 from Para-Chem and is added in amounts as necessary to reach optimum viscosity for each application (for example exam gloves, household gloves, thread, balloons, and condoms ), as would be understood by one skilled in the art.

Films made from compounds of Examples 9-13 were cured at different conditions as set forth in Table 6. The curing conditions were 30 minutes at 120°C and 45 minutes at 120°C. The tensile strength, 300% modulus and elongation of each cured film were tested applying ASTM Test Method D412-98a (2001) e1. After the testing, the films cured for 30 minutes at 120°C were heat aged for 22 hours at 100°C and then again tested for tensile strength, 300% modulus and elongation by applying ASTM Test Method D412-98a (2001) e1. The results are set forth in Table 6.

| **Table 5** | | | | | | |
|---|---|---|---|---|---|---|
| | **Example** | | | | | **Ingredient Supplier** |
| **Components** | **9** | **10** | **11** | **12** | **13** | |
| Polychloroprene latex | 100 | 100 | 100 | 100 | 100 | DuPont Dow |
| Sodium lauryl sulfate | 0.25 | 0.25 | 0.25 | 0.25 | 0.25 | DARVAN®WAQ |
| Zinc oxide | 5.0 | --- | --- | --- | --- | Various |
| Sulfur | 1.5 | 1.5 | 1.5 | 1.5 | 1.5 | Various |
| Blend of a phenolic AO and ZMTI | 2 | 2 | --- | 2 | 2 | VANOX®SPL |
| Dibutyl Thiourea | 1 | 1 | 1 | 1 | --- | THIATE®U |
| Liquid dithiocarbamate WB-7 | 1 | 1 | 1 | | 1 | Vanderbilt |
| Sulfated Methyl Oleate | 0.5 | 0.5 | 0.5 | 0.5 | 0.5 | DARVAN®SMO |
| Thickener | as required → | | | | | Para-chem |

| **Table 6** | | | | | |
|---|---|---|---|---|---|
| | **Results** | | | | |
| | **Example** | | | | |
| **Test Applied** | **9** | **10** | **11** | **12** | **13** |
| Curing for 30 min @ 120°C | | | | | |
| Tensile, MPa | 26 | 25.4 | 20.9 | 17.5 | 15.3 |
| 300% Mod., MPa | 2 | 2 | 1.8 | 1.8 | 1.5 |
| Elong., % | 810 | 810 | 830 | 810 | 850 |
| | | | | | |
| Curing for 45 min @ 120°C | | | | | |
| Tensile, MPa | 29.3 | 29.3 | 22.3 | 25.5 | 21.9 |
| 300% Mod., MPa | 2 | 2 | 1.6 | 1.8 | 1.6 |
| Elong., % | 790 | 790 | 840 | 800 | 860 |
| | | | | | |

| Curing for 30 min @ 120°C and then aging for 22 hrs at 100°C | | | | | |
|---|---|---|---|---|---|
| Tensile, MPa | 34 | 29.9 | 34.6 | 26.6 | 29.6 |
| 300% Mod., MPa | 2.4 | 2 | 2.2 | 2.1 | 1.7 |
| Elong., % | 700 | 710 | 700 | 670 | 760 |

The results of the polychloroprene film testing were surprising considering that polychloroprene is known in the art for its dependence on substantial quantities of metal oxide to achieve a satisfactory cure. For example, excellent physical properties were obtained in Example 10 without the use of zinc oxide or a zinc based accelerator. The results imply that sufficient zinc is supplied by the ZMTI in the antioxidant system to establish zinc chloride crosslinks in addition to the sulfur crosslinks.

The results of testing the compound of Example 10 show that the zinc from the ZMTI may have more of an affect on the cure rate and cure quality for polychloroprene films than 5.0 phr of zinc oxide (Example 9). The physical property results for Example 10, which did not contain zinc oxide, are virtually equivalent to the results from testing of Example 9. However, the physical property results from the testing of Example 11, without ZMTI, are significantly lower.

The results further indicate that the acceleration system of thiourea and liquid dithiocarbamate, WB-7, is synergistic. Using either the thiourea alone in the compound of Example 12 or using the dithiocarbamate alone in the compound of Example 13 produced average results for polychloroprene latex, however, the compound of Example 10, which is comprised of both the thiourea and liquid dithiocarbamate produced excellent physical properties in the polychloroprene latex film, which is an indicator of the synergy achieved in the invention in that neither accelerator alone is as effective as the two in combination.

As discussed above, the samples of Examples 9-13 cured for 30 minutes at 120°C were subjected to heat aging for 22 hours at 100°C. Heat aging of cured polychloroprene latex films generally tends to cause degradation evidenced by continual crosslinking that increases tensile strength and modulus ultimately resulting in polychloroprene latex films becoming hard and brittle. None of the heat aged samples of the invention (e.g., Examples 10-13), however, showed significant decrease in performance properties. The only tested property which decreased in value was elongation. The polychloroprene latex film of Example 10 had the smallest increase in tensile and modulus than the other compounds and retained the most of its original physical properties after heat aging. These aspects of the results from these examples are particularly surprising and dispel the common notion that zinc oxide in abundance is needed to protect the chloroprene polymer from heat degradation. The limited amount of zinc, then, supplied by the synergist, must limit the amount of crosslinking in the polymer, thereby maintaining the original properties and retarding the onset of hard and brittle films.

## Claims

1. A latex compound comprising a natural rubber or a synthetic rubber material and an antioxidant comprising a zinc based synergist wherein the Latex compound does not contain metal oxide.

2. The latex compound of Claim 1 wherein the antioxidant comprises a zinc based synergist selected from the group consisting of zinc 2-mercaptotoluimidazole and zinc 2-mercaptobenzimidazole.

3. The latex compound of Claim 1 wherein the amount of zinc based synergist is 0.1 parts per hundred rubber to 5.0 parts per hundred rubber.

4. The latex compound of Claim 1 which does not contain zinc based accelerators.

5. The latex compound of Claim 1 wherein the antioxidant further comprises phenolic antioxidant.

6. The latex compound of Claim 1 further comprising a liquid dithiocarbamate compound having a water soluble base.

7. The latex compound of Claim 6 wherein the liquid dithiocarbamate is a blend of sodium dithiocarbamate and sodium mercaptobenzothiazole.

8. The latex compound of Claim 1 further comprising a thiourea accelerator.

9. The latex compound of Claim 1 wherein the synthetic rubber material is selected from the group consisting of polyisoprene, polychloroprene, acrylonitrile, styrene-butadiene, sulfur cured butyl latex, and combinations thereof.

10. A cured natural rubber or synthetic rubber material obtained by curing the latex compound of claim 1.

11. An article of manufacture comprising the cured natural rubber or synthetic rubber material of Claim 10.

12. A method for curing natural rubber or synthetic rubber material comprising the steps of forming a film from a latex compound comprising a natural rubber or a synthetic rubber material and an antioxidant comprising a zinc based synergist and heating the film formed from the latex compound, wherein the latex compound comprises no metal oxide.

13. The method of Claim 12 wherein the antioxidant comprises a zinc based synergist selected from the group consisting of zinc 2-mercaptotoluimidazole and zinc 2-mercaptobenzimidazole.

14. The method of Claim 12 wherein the latex compound comprises no zinc based accelerators.

15. The method of Claim 12 wherein the synthetic rubber material is selected from the group consisting of polyisoprone, polychloroprone, acrylonitrite, styrenebutadiene, sulfur cured butyl latex, and combinations thereof.

16. The method of Claim 12 wherein the latex compound further comprises phenolic antioxidant.

17. The method of Claim 12 wherein the latex compound further comprises liquid dithiocarbamate compound having a water soluble base.

18. The method of Claim 12 wherein the Latex compound further comprises a thiourea accelerator.

19. A curing system for latex compounds comprising an antioxidant having a zinc based synergist which provides zinc to the curing system wherein the latex compounds do not comprise metal oxides and zinc based accelerators.

20. The curing system of Claim 19 wherein the zinc based synergist is selected from the group consisting of zinc 2-mercaptotoluimidazole and zinc 2-mercaptobenzimidazole.

## Patentansprüche

1. Latex-Zusammensetzung, umfassend einen Naturkautschuk oder ein synthetisches Kautschukmaterial und ein Antioxidationsmittel, umfassend einen zinkbasierten Synergisten, wobei die Latex-Zusammensetzung kein Metalloxid enthält.

2. Latex-Zusammensetzung nach Anspruch 1, wobei das Antioxidationsmittel einen zinkbasierten Synergisten umfasst, der ausgewählt ist aus der Gruppe bestehend aus Zink-2-mercaptotoluimidazol und Zink-2-mercaptobenzimidazol.

3. Latex-Zusammensetzung nach Anspruch 1, wobei die Menge des zinkbasierten Synergisten 0,1 Teile pro hundert Kautschuk bis 5,0 Teile pro hundert Kautschuk beträgt.

4. Latex-Zusammensetzung nach Anspruch 1, die keine zinkbasierten Beschleuniger enthält.

5. Latex-Zusammensetzung nach Anspruch 1, wobei das Antioxidationsmittel des Weiteren ein phenolisches Antioxidationsmittel umfasst.

6. Latex-Zusammensetzung nach Anspruch 1, des Weiteren umfassend eine flüssige Dithiocarbamat-Verbindung mit einer wasserlöslichen Base.

7. Latex-Zusammensetzung nach Anspruch 6, wobei das flüssige Dithiocarbamat eine Mischung aus Natriumdithiocarbamat und Natriummercaptobenzothiazol ist.

8. Latex-Zusammensetzung nach Anspruch 1, des Weiteren umfassend einen Thioharnstoff-Beschleuniger.

9. Latex-Zusammensetzung nach Anspruch 1, wobei das synthetische Kautschukmaterial ausgewählt ist aus der Gruppe bestehend aus Polyisopren, Polychloropren, Acrylnitril, Styrol-Butadien, schwefelvulkanisiertem Butyllatex und Kombinationen derselben.

10. Vulkanisiertes Naturkautschuk- oder synthetisches Kautschukmaterial, das erhalten wird durch Vulkanisieren der Latex-Zusammensetzung nach Anspruch 1.

11. Herstellungsartikel, umfassend das vulkanisierte Naturkautschuk- oder synthetische Kautschukmaterial nach Anspruch 10.

12. Verfahren zum Vulkanisieren eines Naturkautschuk- oder synthetischen Kautschukmaterials, umfassend die Schritte:
Bildung eines Films aus einer Latex-Zusammensetzung, umfassend einen Naturkautschuk oder ein synthetisches Kautschukmaterial und ein Antioxidationsmittel, welches einen zinkbasierten Synergisten umfasst, und Erhitzen des aus der Latex-Zusammensetzung gebildeten Films, wobei die Latex-Zusammensetzung kein Metalloxid umfasst.

13. Verfahren nach Anspruch 12, wobei das Antioxidationsmittel einen zinkbasierten Synergisten umfasst, der ausgewählt ist aus der Gruppe bestehend aus Zink-2-mercaptotoluimidazol und Zink-2-mercaptobenzimidazol.

14. Verfahren nach Anspruch 12, wobei die Latex-Zusammensetzung keine zinkbasierten Beschleuniger umfasst.

15. Verfahren nach Anspruch 12, wobei das synthetische Kautschukmaterial ausgewählt ist aus der Gruppe bestehend aus Polyisopren, Polychloropren, Acrylnitril, Styrol-Butadien, schwefelvulkanisiertem Butyllatex und Kombinationen derselben.

16. Verfahren nach Anspruch 12, wobei die Latex-Zusammensetzung des Weiteren ein phenolisches Antioxidationsmittel umfasst.

17. Verfahren nach Anspruch 12, wobei die Latex-Zusammensetzung des Weiteren eine flüssige Dithiocarbamat-Verbindung mit einer wasserlöslichen Base umfasst.

18. Verfahren nach Anspruch 12, wobei die Latex-Zusammensetzung des Weiteren einen Thioharnstoff-Beschleuniger umfasst.

19. Vulkanisationssystem für Latex-Zusammensetzungen, umfassend ein Antioxidationsmittel mit einem zinkbasierten Synergisten, der das Vulkanisationssystem mit Zink versorgt, wobei die Latex-Zusammensetzungen keine Metalloxide und zinkbasierten Beschleuniger umfassen.

20. Vulkanisationssystem nach Anspruch 19, wobei der zinkbasierte Synergist ausgewählt ist aus der Gruppe bestehend aus Zink-2-mercaptotoluimidazol und Zink-2-mercaptobenzimidazol.

## Revendications

1. Composé de latex comprenant un caoutchouc naturel ou une matière de caoutchouc synthétique et un antioxydant comprenant un agent synergique à base de zinc, dans lequel le composé de latex ne contient pas d'oxyde de métal.

2. Composé de latex selon la revendication 1, dans lequel l'antioxydant comprend un agent synergique à base de zinc sélectionné parmi le groupe constitué du 2-mercaptotoluimidazole de zinc et du 2-mercaptobenzimidazole de zinc.

3. Composé de latex selon la revendication 1 dans lequel la quantité d'agent synergique à base de zinc est de 0,1 parties pour cent du caoutchouc à 5,0 parties pour cent du caoutchouc.

4. Composé de latex selon la revendication 1 qui ne contient pas d'accélérateurs à base de zinc.

5. Composé de latex selon la revendication 1, dans lequel l'antioxydant comprend en plus un antioxydant phénolique.

6. Composé de latex selon la revendication 1 comprenant en plus un composé de dithiocarbamate liquide ayant une base hydrosoluble.

7. Composé de latex selon la revendication 6, dans lequel le dithiocarbamate liquide est un mélange de sodium dithiocarbamate et de sodium mercaptobenzothiazole.

8. Composé de latex selon la revendication 1 comprenant en plus un accélérateur de thiourée.

9. Composé de latex selon la revendication 1, dans lequel la matière de caoutchouc synthétique est choisie parmi le groupe comprenant le polyisoprène, le polychloroprène, l'acrylonitrile, le styrène-butadiène, le butyl latex vulcanisé au soufre et des combinaisons d'entre eux.

10. Caoutchouc naturel ou matière de caoutchouc synthétique vulcanisé(e) obtenu(e) en vulcanisant le composé de latex selon la revendication 1.

11. Produit manufacturé comprenant le caoutchouc naturel ou la matière de caoutchouc synthétique vulcanisé(e) selon la revendication 10.

12. Procédé de vulcanisation de caoutchouc naturel ou de matière de caoutchouc synthétique comprenant les étapes consistant à former une pellicule à partir d'un composé de latex comprenant un caoutchouc naturel ou une matière de caoutchouc synthétique et un antioxydant comportant un agent synergique à base de zinc et à chauffer la pellicule formée par le composé de latex, dans lequel le composé de latex ne comprend aucun oxyde de métal.

13. Procédé selon la revendication 12, dans lequel l'antioxydant comprend un agent synergique à base de zinc sélectionné parmi le groupe constitué du 2-mercaptotoluimidazole de zinc et du 2-mercaptobenzimidazole de zinc.

14. Procédé selon la revendication 12, dans lequel le composé de latex ne comprend aucun accélérateur à base de zinc.

15. Procédé selon la revendication 12, dans lequel la matière de caoutchouc synthétique est sélectionnée parmi le groupe comprenant le polyisoprène, le polychloroprène, l'acrylonitrile, le styrène-butadiène, le butyl latex vulcanisé au soufre et des combinaisons d'entre eux.

16. Procédé selon la revendication 12, dans lequel le composé de latex comprend en plus un antioxydant phénolique.

17. Procédé selon la revendication 12, dans lequel le composé de latex comprend en plus un composé de dithiocarbamate liquide ayant une base hydrosoluble.

18. Procédé selon la revendication 12, dans lequel le composé de latex comprend en plus un accélérateur de thiourée.

19. Système de vulcanisation pour des composés de latex comprenant un antioxydant comportant un agent synergique à base de zinc qui fournit du zinc au système de vulcanisation, dans lequel les composés de latex ne comprennent pas d'oxydes de métal ni d'accélérateurs à base de zinc.

20. Système de vulcanisation selon la revendication 19 dans lequel l'agent synergique à base de zinc est sélectionné parmi le groupe constitué du 2-mercaptotoluimidazole de zinc et du 2-mercaptobenzimidazole de zinc.
